# EUROPEAN PATENT APPLICATION

(11) **EP 4 339 721 A1**
(43) Date of publication of application: **20.03.2024**
(21) Application number: 23196494.1
(22) Date of filing: 11.09.2023
(51) Int. Cl.: G05B 19/18, G05B 23/02, G06F 3/01, G06T 19/00

(54) **METHOD FOR DISPLAYING INFORMATION ON A MACHINE TOOL AND RELATED WORKING PLANT**

(30) Priority: 15.09.2022 IT 202200018918
(71) Applicant: SCM Group S.p.A., 47921 Rimini (RN) (IT)
(72) Inventor: FRUGIERI, Emilio, 47921 Rimini (IT); CHIARELLI, Andrea, 47921 Rimini (IT); BIAGI, Carlo, 47921 Rimini (IT)
(74) Representative: Tiburzi, Andrea

(57) **Abstract**

The present invention concerns a Method for displaying information relating to the configuration of a machine tool (1), comprising the steps of: A. reading from a memory unit of said machine tool (1) said information; B. sending said information to a display (5) for augmented reality; and C. overlapping on a real image of the environment surrounding said machine tool (1) and/or said machine tool (1), said information, through said display (5) for augmented reality.

The present invention also concerns a working plant for machining a piece.

## Description

The present invention concerns a method for displaying information on a machine tool and related working plant.

### Field of invention

In more detail, the invention concerns a method for displaying information relating to the work settings of a machine tool, in particular, a panel saw, and more particularly a circular saw, for working, particularly cutting, a wooden panel, or similar materials.

Furthermore, the invention concerns a working system comprising a machine tool, in particular a panel saw, and more in particular a circular saw, and all the devices, suitably configured, for carrying out the method according to the invention.

In the following, the description of this method, and the related work system, will be aimed at a cutting machine, in particular a circular saw, but it is clear that they should not be considered limited to this specific use, being able to apply this method to other machine tools such as, for example, spindle moulders, surface or thickness planers, sanders, panel saws, work centers, or edge-banders.

In the following, reference will always be made to a generic panel, meaning it is made of wood or similar materials, but it is clear that the method and the related work system described here should not be considered limited to this specific use, as it can be applied to the machining of panels, of squares and, more generally, of workpieces of any material.

### Prior art

Cutting machines are known comprising a tool assembly, or cutting tool, in particular a circular saw, for cutting a panel into a plurality of parts, along a cutting direction.

This panel includes a first side, a second side, a third side, and a fourth side, and can be positioned on the cutting machine so that the first side and the third side extend substantially perpendicular to the cutting direction, and the second side and the fourth side extend substantially parallel to the cutting direction.

In particular, these cutting machines are configured to cut said panel so that, with each cut, the panel is divided into two parts.

Furthermore, these cutting machines are designed - not exclusively - to make cuts passing through the panel.

The aforementioned panel saws include a panel support plane. The support plane typically includes a fixed portion and a support carriage.

This support carriage extends, and is movable by an operator, substantially parallel to the cutting direction, to move the aforementioned panel towards and away from the cutting tool. Through this relative motion between the panel and the cutting tool, the panel itself is cut, i.e. divided into two parts.

These cutting machines also include matching means to refer the panel to the cutting machine. The abutment means can include first abutment means and second abutment means positioned opposite the cutting tool and can be used and selected alternatively by the operator to act as a abutment for the panel during cutting.

The first abutment means comprise a first gauging element, or line, which can be positioned by the operator in a desired operating position, depending on the dimensions of the panel, along and above the support carriage.

This first abutment element extends substantially perpendicular to the cutting direction and includes a first abutment wall arranged, in use, to abut the first side or the third side of the panel.

The first abutment means further comprises one or more abutments, or stops, slidably supported by the first abutment element.

These abutments can be positioned manually by the operator along the first abutment element in a plurality of working positions. In other known embodiments, these abutments can be positioned automatically, by means of actuators, along the first abutment element in a plurality of working positions.

In particular, each abutment is movable between an active position, in which the abutment interacts with, and acts as an abutment for, the second side or the fourth side of the panel, and an inactive position, in which the abutment does not interact with the panel.

The second abutment means, which can be used alternatively to the first abutment means, comprises a second abutment element, or guide, which can be movable manually, or automatically, via an actuator, towards or away from the cutting tool substantially perpendicular to the cutting direction.

In particular, this second abutment element extends substantially parallel to the cutting direction and includes a second abutment wall arranged, in use, to abut the second or fourth side of the panel.

These cutting machines also include an interface, typically comprising a screen, or display, through which the operator can interact with the cutting machine.

The interface, or *Human Machine Interface* (HMI), via the screen, shows the operator information relating to the settings, or configurations, of the cutting machine, such as, for example:
- the rotation speed of the machining tool (or cutting speed), for example, of the main blade and/or the engraving blade;
- the height of the main blade, and/or of the engraver, compared to the support plane, or the height of the portion of the blade that emerges from the support plane;
- the inclination of the main blade with respect to the normal cutting plane, that is, the cutting plane perpendicular to the support plane; and
- the height of the abutments and/or the guide.

Furthermore, the HMI typically includes input devices to be able to insert, or provide, or modify the data relating to the work settings of the panel saw listed above.

The input devices can be physical buttons, or, if this screen is a touchscreen type, they can be virtual buttons displayed on the HMI screen or a mix of both types.

If the sawing machine includes automatically moving parts such as, for example, the axes of the main blade, the axes of the engraving blade, the abutments, or the guide, when the operator enters or modifies, data relating to a dimension of one of these automatically moving parts, the sawing machine carries out the movement command thus given, positioning the moving part automatically at the height set via the HMI.

For safety reasons, the interface typically includes a validation button that the operator must press in order for the instructions given via the HMI to become operational.

The interface is typically arranged above the support plane in a concentrated area, which should be easily visible and accessible by the operator. In other types of machines the interface can be arranged in other areas of the machine, such as, for example, below the support plane, but always in a concentrated area.

It is clear that in the prior art, before machining a panel, the operator must check the current machining settings of the panel saw and modify the incorrect settings for the type of machining to be performed.

However, the layout of the interface, and the fact that it is concentrated in only one area of the machine tool, forces the operator to continuously move his gaze from the screen to the cutting machine, and vice versa, during the entire machine tool setting phase, making it uncomfortable and complex for the operator.

Furthermore, the operator is forced to look away from the panel, the working surface, and the supports, and this could lead to errors, even if the operator is expert, leading to an increase in machining waste.

Furthermore, having to move his gaze from the screen to the sawing machine, and in particular from the cutting tool, and vice versa, the operator, thus distracted, can be in a dangerous situation.

### Scope of the invention

In light of the above, it is, therefore, the scope of the present invention to provide a method for displaying information on a machine tool that is simple and fast, and to make the information constantly and more immediately usable, even for a non-expert operator.

Another scope of the invention is to significantly reduce the possibility of error and, consequently, machining waste.

Furthermore, one scope of the invention is to significantly reduce the risk of accidents for the operator, reducing sources of distraction during the machining sequences of the panel itself.

A further scope of the present invention is to provide the instruments necessary for carrying out the improved method and the apparatus which carry out this improved method.

### Object of the invention

These and other results are achieved according to the invention with a method for displaying information of a machine tool and the related working system.

It is therefore specific object of the present invention a method for displaying information relating to the configuration of a machine tool, comprising the steps of: A. reading from a memory unit of said machine tool said information; B. sending said information to a display for augmented reality; and C. overlapping on a real image of the environment surrounding said machine tool and/or said machine tool, said information, through said display for augmented reality.

Always according to the invention, at least one portion of said information may be visible, in augmented reality, in a grouped way within at least one displaying space.

Still according to the invention, at least one information of said information may be visible, in augmented reality, in correspondence of a part of said machine tool, said at least one information representing a configuration parameter relating to said part of said machine tool.

Advantageously according to the invention, said method may comprise the step of: D. superimposing on a real image of the environment surrounding said machine tool and/or of said machine tool at least one virtual image of a part of said machine tool, through said display for augmented reality; and at least one piece of information of said information may be visible, in augmented reality, in correspondence with said at least one virtual image, said at least one information representing a configuration parameter relating to said part of said machine tool.

Further according to the invention, said method may comprise the steps of: E. overlapping on a real image of the environment surrounding said machine tool and/or said machine tool, at least one virtual command, or at least one virtual image of a part of said machine tool, visible in augmented reality, through said display for augmented reality; F. receiving an input relating to the interaction between an operator, and said at least one virtual command or at least a virtual image of a part of said machine tool, said interaction being detected through a device for augmented reality; and G. modifying, within said memory unit, at least one information of said information, as a function of said input.

Preferably according to the invention, said device for augmented reality may be a display for augmented reality and/or an instrumented glove and/or a joystick for augmented reality.

Always according to the invention, said at least one virtual command interacts with said operator in the manner of a button, or a cursor, or a free text field, or a drop-down menu.

Still according to the invention, said at least one virtual command may be visible, in augmented reality, in correspondence with a part of said machine tool.

Advantageously according to the invention, said at least one virtual command may be visible, in augmented reality, in correspondence with at least one virtual image of said part of said machine tool visible, in augmented reality, through said display for augmented reality.

Further according to the invention, said at least one virtual command may be visible, in augmented reality, within said at least one displaying space.

Preferably according to the invention, said at least one information of said information represents a configuration parameter relating to a part of said machine tool, and in that it comprises the step of: H. processing a target configuration of said part of said machine tool as a function of said at least one information.

Always according to the invention, said method may comprise the step of: I. overlapping information relating to said target configuration on said real image of said machine tool.

Still according to the invention, said method may comprise the step of: L. operating an actuator relating to said part of said machine tool, in such a way that said part assumes said target configuration.

Advantageously according to the invention, said method may comprise the step of: M. performing step L only after receiving a physical input through a physical input device, for example, a wired button.

Preferably according to the invention, said method may comprise the step of: N. providing feedback to an operator when said part of said machine tool has assumed said target configuration, said feedback being, for example, of the optical, acoustic, haptic, vibrational type.

Further according to the invention, said method may comprise the steps of: O. detecting, through a device for augmented reality, the interaction between an operator and said information, visible in augmented reality, or said at least one virtual command, visible in augmented reality; and P. positioning in the environment surrounding said machine tool, said information, or said at least one virtual command, as a function of said interaction.

Always according to the invention, said method may comprise the steps of: Q. reading from said memory unit of said machine tool, further information which represents at least one dangerous condition for the operator; R. checking if said dangerous conditions are in place, in particular through said display for augmented reality; and S. if the dangerous conditions are verified, providing feedback to the operator through a device for augmented reality.

It is also object of the present invention a working plant for working a piece made of wood or similar materials, comprising: a machine tool; a control unit; and an augmented reality display, wherein said machine tool comprises: a cutting tool for machining said piece; a support plane for supporting said piece; abutment means for referencing said piece with respect to said machine tool; and storage means for storing information relating to the machining configuration of said machine tool; said control unit being in communication with said machine tool and said display for augmented reality, so as to be able to exchange information from, and to, said machine tool, and from, and to said display for augmented reality, said display being configured to overlap information received from said control unit on a real image, said working plant being characterized in that said control unit is programmed to read information from said memory unit of said machine tool, and exchange information with said augmented reality display and said machine tool, to perform the method as defined above.

### Brief description of the figures

The present invention will be now described, for illustrative but not limitative purposes, according to its preferred embodiments, with particular reference to the figures of the enclosed drawings, wherein:
figure 1 shows an axonometric view of a circular saw, of a panel arranged above it, and of information visible in augmented reality, via an augmented reality viewer, for the execution of the method according to the invention;
figure 2 shows a further axonometric view of a circular saw, of a panel arranged above it and of information visible in augmented reality, via an augmented reality viewer, for the execution of the method according to the invention; and
figure 3 shows a flowchart of the method for displaying information of a machine tool according to the present invention.

### Detailed description

In the various figures the similar parts will be indicated with the same numerical references.

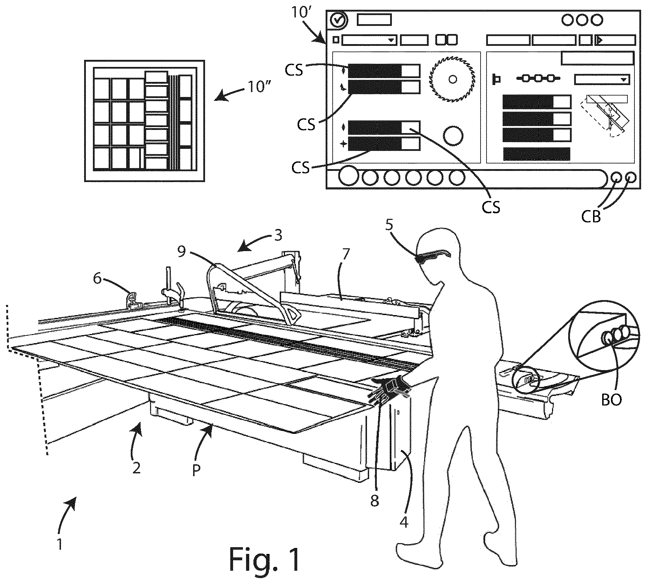

Referring to figure 1, a cutting machine 1 is shown, in particular a circular saw, comprising a support plane 2 to support a panel P made of wood, or similar materials, and a cutting tool 3, or cutting tool, suitable for cutting the panel P into a plurality of parts PF, PR, PS, and defining a cutting direction.

The numerical reference 9 shows a chip suction device, which also acts as a protection device for said cutting tool 3 arranged above said support plane 2, in correspondence with said cutting tool 3.

The chip suction device 9 is typically connected to a vacuum pump and a chip collector (not shown in the figure). When the cutting tool 3 cuts panel P, chips are generated.

The chip is then intercepted and evacuated by said suction device 9.

The suction system 9 can be vertically movable, so as to adapt to the different heights of the panel P to be cut.

The suction system 9 can, therefore, be positioned manually by the operator in a plurality of working positions, or it can be positioned automatically, using actuators.

The cutting machine 1 also includes abutment means 6, 7 to refer the panel P with respect to the cutting machine 1 itself.

Said abutment means 6, 7 include first abutment means 6 and second abutment means 7, positioned opposite the cutting tool 3 and can be used and selected alternatively by the operator to act as a abutment for the panel P during cutting.

The first abutment means 6 comprise a first abutment element, or line, which can be positioned by the operator in a desired operating position, depending on the dimensions of the panel P, along and above the support carriage.

This first abutment element extends substantially perpendicular to the cutting direction and includes a first abutment wall, arranged, in use, to abut the first side or the third side of the panel P.

The first abutment means 6 further comprise one or more abutments 6, or stops, slidably supported by the first abutment element.

These abutments 6 can be positioned manually by the operator along the first abutment element in a plurality of working positions. In other known forms, these abutments 6 can be positioned automatically, by means of actuators, along the first abutment element in a plurality of working positions.

In particular, each abutment 6 is movable between an active position, in which the abutment interacts with, and acts as a abutment for the second side or the fourth side of the panel P, and a non-active position, in which the abutment does not interact with the panel P.

The second abutment means 7, which can be used alternatively to the first abutment means, comprises a second abutment element, or guide, which can be moved manually or automatically, via an actuator, towards or away from the cutting tool 3 substantially perpendicular to the cutting direction.

In particular, this second abutment element extends substantially parallel to the cutting direction, and comprises a second abutment wall 7 arranged, in use, to abut the second or fourth side of the panel P.

Again with reference to figure 1, the cutting machine 1 includes a control unit 4, also called a processing unit.

In other embodiments, a part of the control unit 4 can be arranged remotely from the sawing machine 1.

In other embodiments, the control unit 4 can be distributed, that is, it can include several parts physically separated and placed in different places, but interconnected with each other, so as to perform the required functions.

The control unit 4 can be, for example, a Personal Computer, a numerical control, a cloud server, an embedded electronic board, or a combination of these, and can run software.

The control unit 4 includes communication means (not shown in the figure) to be able to communicate from and to external electronic devices.

Furthermore, the control unit 4 includes a memory unit (not visible in the figure) containing information relating to the configuration of the machine tool 1.

The configuration information represents parameters, or settings, of machine tool 1 or parts 3, 6, 7, 9 of it.

For example, such parameters can represent:
- the rotation speed of the cutting tool 3 (or cutting speed), for example, of the main blade or the engraving blade;
- the height of the cutting tool 3, for example, of the main blade, or of the engraving blade, with respect to the support plane 2, or the height of the portion of the blade that emerges from the support plane 2;
- the inclination of the cutting tool 3, for example, of the main blade with respect to the normal cutting plane, that is, the cutting plane perpendicular to the support plane 2;
- the height of the abutments 6 or of the guide 7; and
- the height of the suction device 9.

The information relating to the configuration of machine tool 1 is therefore used to configure the machine tool 1 itself, in order to carry out the desired machining on the piece (P).

With reference to figure 1, a first device 5 for augmented reality is shown, in particular, a display 5 for augmented reality, and a second device 8 for augmented reality, in particular an instrumented glove 8, both worn by an operator.

By augmented reality, it is meant an operational/sensory mode, in which an operator is provided with additional information in addition to that perceived by the operator himself through his five senses.

The augmented reality display 5 is configured so that additional information can be superimposed on a real image, thus increasing the reality perceived by the operator.

The display 5 for augmented reality, for example, can be glasses featuring a transparent screen, so that the operator's eye can see the real image of the space around him in transparency.

On this transparent screen, the augmented reality display 5 can project graphic signs such as, for example, shapes, colors and/or alphanumeric symbols, providing the operator with additional information relating to the real image of the space (or environment), or of the objects, which she/he is observing with his own eyes.

The instrumented glove 8, for example, can be a glove comprising actuators, or transducers, to provide further stimuli to the operator, for example, of a haptic and/or vibrational type, providing the operator with additional information compared to that perceived by her/his senses.

Both the first device 5 and the second device 8 can be in communication with the control unit 4, so as to be able to exchange information from and to the control unit 4 itself.

Furthermore, the first device 5 and the second device 8 can communicate directly with each other, for example in a bidirectional manner.

Again with reference to figure 1, a panel P is shown, placed on the support plane 2 of the sawing machine 1. Superimpose on the real image of the environment surrounding the machine tool 1, information relating to the configuration of said machine tool 1 is visible.

This information is made visible to the operator, in augmented reality, via the augmented reality display 5.

In particular, the information is grouped in two display spaces 10', 10" similar to the windows of a software which, in the known art, would be displayed on a common screen, but which, within the scope of the invention, are visible to the operator, in augmented reality, via the augmented reality display 5.

In particular, a first display space 10' shows the information relating to the configuration of the machine tool 1, such as, for example, the dimensions of some parts of the cutting machine 1, or a graphic representation of the position that a part of the machine tool 1 must assume as, for example, the angle of the first abutment element with respect to the cutting line or guide 7.

More specifically, with reference to figure 1, in the first display space 10' the dimensions relating to the height SZ1 and the inclination S α1 are shown of the main blade, and the dimensions relating to the height SZ2 and the transversal position SY2 of the engraver.

A second display space 10" also shows additional information relating to the machining to be carried out using the machine tool 1 itself, such as, for example, the cutting scheme of the panel P to be created.

Superimposed on the real image of the environment surrounding machine tool 1, virtual commands SZ1, S α1, SZ2, SY2, SCS, CB, MT, TX are also visible.

Such virtual commands SZ1, Sα1, SZ2, SY2, SCS, CB, MT, TX are made visible to the operator, in augmented reality, via the augmented reality display 5.

The reference BO represents a physical button, for example, a wired button.

When the physical button is pressed by the operator, this sends an input signal to the control unit 4, making the settings operational via said virtual commands SZ1, Sα1, SZ2, SY2, SCS, CB, MT, TX.

The machine tool 1 can have several physical buttons, which can be arranged in different positions such as, for example, on the support plane 2, on the base of the machine tool 1, on control panels, which typically group together a plurality of physical buttons.

The position of the physical buttons is chosen so that the operator can interact with these physical buttons in the simplest, most comfortable and fastest way. These physical buttons can also perform further functions. An example of a physical button that can be present on machine tools is the emergency button, which is pressed by the operator in case of danger in order to deactivate the machine and, in particular, the tool groups, or the start button that activates the rotation of the main blade and/or the engraver, or other actuators to position one or more parts of the machine tool 1.

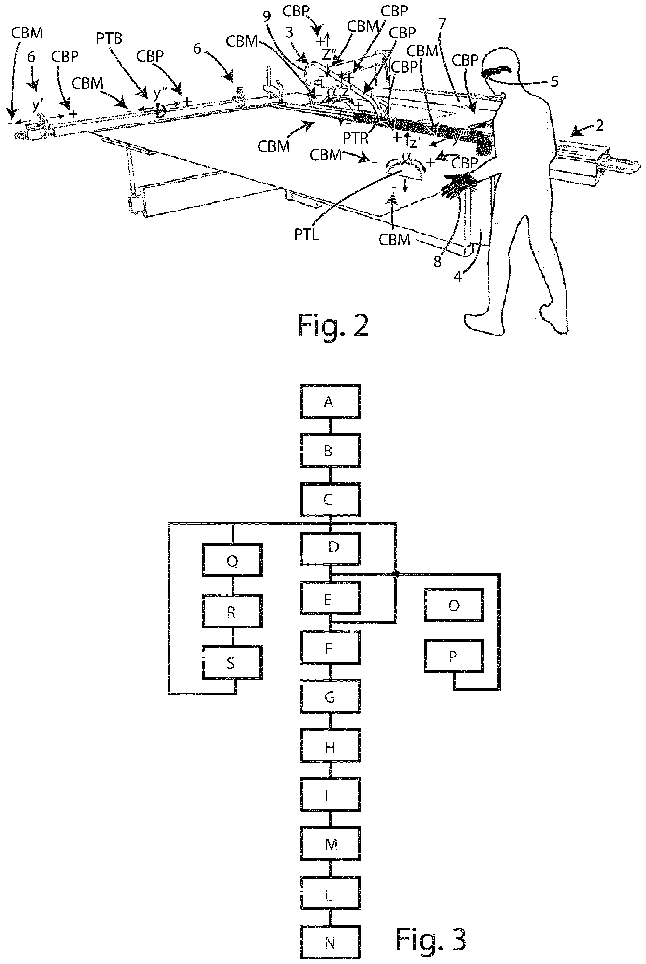

With reference to figure 2, an operator is shown, who is wearing a visor 5 and an instrumented glove 8, and is close to a machine tool 1, a panel P placed on the support plane 2 of said machine tool 1, and virtual images PTB, PTR, PTL of parts of machine tool 1, in particular, virtual images of cutting tool 3, i.e., of the main blade, a abutment 6 and the guide 7.

These virtual images PTB, PTR, PTL are made visible to the operator, in augmented reality, via the augmented reality display 5.

Both in correspondence with parts 3, 6, 7, 9 of the machine tool 1, and in correspondence with virtual images of some of these parts 3, 6, 7, the machine tool configuration information 1 are visible to the operator, in augmented reality, through the augmented reality display 5.

In particular, in correspondence with an abutment 6 the information relating to its height Y' is visible, which represents its position on the first matching element, while in correspondence with the virtual image PTB of the abutment 6 the information relating to its height Y", which can represent its virtual position on the first matching element, that is, the target height (or target configuration) of the relevant real abutment 6.

Furthermore, in correspondence with the main blade 3 (or tool group) the information relating to its height Z' is visible, which represents its height with respect to the support plane 2, and the information relating to its height α, which represents the inclination of the main blade with respect to the normal cutting plane.

This information (or heights) Z', α can also be visible in proximity to a virtual PTL image of the cutting tool 3, representing its virtual position on the support plane 2 (at least with reference to the Z' and α, as represented in figure 2), that is, the target height (or target configuration) desired for the specific machining to be carried out on the piece (P).

Again with reference to figure 2, in correspondence with the virtual PTR image of the guide 7, the information relating to its height Y‴ is visible, which represents its virtual position on the support plane 2, that is, the target height (or configuration target) of the relevant guide 7, calculated, for example, with respect to the cutting line, to carry out the desired machining on the piece (P).

Again with reference to figure 2, at the suction device 9 the information relating to its height Z" is visible, which represents the height of the suction device 9 with respect to the support plane 2.

Near each of the pieces of information, or heights, described above, virtual CBM and CMP controls are visible to the operator in augmented reality via the augmented reality display 5.

These virtual commands are represented respectively by the "-" symbol and the "+" symbol and indicate to the operator the function, or command, respectively, to decrease or increase the relative height. Alternatively, the virtual commands can be sent by acting directly with the PTL virtual image of the cutting tool 3, with the PTB virtual image of the abutment 6, or with the PTR virtual image of the guide 7, for example by directly moving said virtual images PTL, PTB, PTR.

The operation of the improved method, according to the invention, is as follows.

The control unit 4 reads the information relating to its configuration from a memory unit of said machine tool 1.

This information represents, for example, the current configuration of the machine tool 1, and may contain, for example, the Z' dimensions of the main blade 3, or its inclination angle α, the Y' dimension of at least one abutment 6, the dimension Y‴ of the guide 7, or the Z" dimension of the suction device 9.

This operation, or step, is identified, in figure 3, with the reference A.

Reference B indicates, again in figure 3, the step in which the control unit 4 sends this information to the display 5 for augmented reality.

The display 5 allows the operator who wears it to see this information, superimposed on the real image of the environment surrounding said machine tool 1.

This step is identified, in figure 3, with the reference C.

In addition to the information related to the configuration of the machine tool 1, virtual CS commands can be shown to the operator, again in augmented reality, via the display 5; CB; CBP; CBM; MT; TX.

This step is identified, in figure 3, with the reference E.

Through an augmented reality device such as, for example, the display 5 itself, it is possible to detect, for example, a gesture of the operator interacting with one of the virtual commands.

Other types of augmented reality devices can be used for this function, such as, for example, an instrumented glove 8 or an augmented reality joystick, such as those used in virtual reality systems.

Both devices cited as an example can, in fact, detect, for example, the movements of the operator's hand and interpret these movements as command movements, that is, movements that interact with the virtual commands displayed, in augmented reality, through the display 5.

The type of interaction can vary from virtual command to virtual command, and can be linked to the type of graphic representation that characterizes the virtual command itself.

For example, some virtual CB, CBP, CBM controls can interact with the operator as if they were physical buttons.

In this case, the display 5 can detect the movement of the operator's hand, which simulates the pressure of said virtual buttons CB, CBP, CBM, generating a related input.

Said virtual buttons CB, CBP, CBM can have a circular shape, so as to resemble a physical button, or they can be represented using symbols, such as the "-" symbol or the "+" symbol, to suggest to the operator the type input provided by pressing the virtual button itself.

Furthermore, some virtual commands CS can interact with the operator as if they were cursors (CS).

In this case, the display 5 can detect the movement of the operator's hand which simulates the sliding of the virtual cursor CS, generating a related input.

Other virtual commands TX can interact with the operator as if they were free text fields.

In this case, the display 5 can detect the movement of the operator's hand, which simulates writing within the text field, or, a virtual keyboard (also shown in augmented reality) can be used to write text or, furthermore, a physical keyboard can be used, present, for example, in the joystick for augmented reality, or a voice command can be used to fill in the text field, thus generating a related textual input.

Further virtual commands MT can interact with the operator as if they were drop-down menus.

In this case, the display 5 can detect the movement of the operator's hand, which simulates the opening of the drop-down menu and the subsequent selection of the menu line itself.

The interaction, thus detected, is then sent from the augmented reality device to the control unit 4, which interprets this interaction as a command, in particular an input.

This step is identified, in figure 3, with the reference F.

The input thus generated has the purpose of modifying at least one of the information stored within the memory unit.

This step is identified, in figure 3, with the reference G.

With reference to figure 1, the operator can, for example, modify the height Z' of the main blade, which can be one of the information saved in the memory unit, by interacting, through a sliding movement, with the corresponding virtual command CS, or, can activate an actuator, for example the actuator that adjusts the height of the suction device 9, by pressing the virtual control CB, and thus modifying the Z" position inside the memory unit.

With reference to figure 2, the operator can, for example, increase the height Z' of the main blade by interacting with the virtual command CBP, which is represented by the "+" sign, which suggests to the operator the increase function of the relevant height.

Both the information and the virtual commands can be arranged in a grouped manner within one, or more, display spaces (10'; 10"), so that the operator can have a well-organized space where he can find all the useful information and necessary commands.

Furthermore, both the information and the virtual commands can be arranged in proximity to a part 3, 6, 7, 9 of the machine tool 1, so that the information and the related commands are spatially associated with the inherent part and the operator can move along the machine tool 1 finding information and commands close at hand.

However, some parts may not be easily reachable, or not very visible, so it may be advantageous to create virtual images PTL, PTB, PTR of a part 3, 6, 7 of the machine tool 1, in order to have close to said virtual images PTL, PTB, PTR the information and the virtual commands relating to the real parts 3, 6, 7 of the machine tool 1 that the virtual images PTL, PTB, PTR represent.

Therefore, in addition to the information related to the configuration of the machine tool 1, the operator can be shown, again in augmented reality, via the display 5, virtual PTL, PTB, PTR images of a part 3, 6, 7 of the machine tool 1.

This step is identified, in figure 3, with the reference D.

Virtual images PTL, PTB, PTR can also be used as virtual commands. For example, with reference to figure 2, the operator could simulate with his own hand the movement of the virtual PTB image along the first reference element; the display 5 could detect this interaction and send the interaction itself to the processing unit 4; the processing unit 4 could interpret the interaction and consequently vary the height Y" within the memory unit.

Again with reference to figure 2, the operator could, for example, increase the height Z' of the main blade by interacting directly with the virtual image PTL.

The information and virtual commands thus shown to the operator can be positioned in the surrounding environment in various positions.

These positions can be preset, i.e. the information can be displayed via the display 5 in pre-established positions (basic configuration), or determined by the operator, who can, therefore, create his own preferred configurations (custom configurations).

The operator can also interact with the information and virtual commands CS, CB, TX, MT present in the first display space 10', modifying the position of such information and/or such virtual commands CS, CB, TX, MT all inside the first viewing space 10' itself, even to the point of further subdividing the first viewing space 10', thus creating further viewing spaces.

The invention, therefore, provides detecting the interaction between the operator and said information, virtual commands CS, CB, TX, MT, CBP, CBM, or virtual images PTL, PTB, PTR, visible in augmented reality, through a device for augmented reality such as, for example, the display 5 itself (this step is identified, in figure 3, with the reference O), and to position said information, said virtual commands CS, CB, CBP, CBM, MT, TX, or said virtual images PTL, PTR, PTB, in the environment surrounding said machine tool 1, depending on said interaction (this step is identified, in figure 3, with the reference P).

The processing unit 4, based on at least one configuration information relating to a part 3, 6, 7 of the machine tool 1, calculates the target configuration PTL, PTB, PTR of said part 3, 6, 7.

Typically the target configuration, or target position, of the part 3, 6, 7 can be defined (calculated or processed) by a software that can be executed by the processing unit 4, or can be defined by the operator himself, and be entered within the memory unit via an operator input operation, which may be the result of step G of the present invention.

The target configuration of part 3, 6, 7 may coincide with the current configuration of part 3, 6, 7 of machine tool 1, or it may be different from the current configuration.

With the reference H, in figure 3, we therefore identify the step in which the processing unit 4 processes a target configuration PTL, PTB, PTR, of said part 3, 6, 7, of said machine tool 1 in operation of said at least one piece of information.

The invention also provides a step in which the target configuration PTL, PTB, PTR, of said part 3, 6, 7, of said machine tool 1, is shown to the operator, in augmented reality, via the display 5, particularly when the current configuration, or position, of part 3, 6, 7 of machine tool 1, is different than the desired target configuration. This step is indicated, in figure 3, with the reference I.

Note that, with reference to figure 2, the virtual PTL, PTB, PTR images of the parts 3, 6, 7 of the machine tool 1 can therefore be either target configurations (for example PTB and PTR) or virtual representations of a part of the machine tool 1 in a more convenient position for the operation (for example PTL).

The operator can, therefore, modify the target configuration of a part 3, 6, 7 of the machine tool 1, for example she/he can increase the Y" position relating to the virtual image PTB, which refers to a measure 6, by pressing the virtual command CBP.

Through the display 5, the operator will see the virtual image PTB move appropriately until it reaches the set new height Y".

However, the actual position of the relevant measure 6 is different from the target configuration.

The operator, before machining the piece (P), must therefore position the relevant abutment 6 in correspondence with the target configuration.

Since the target configuration is visible in augmented reality, the operator is guided to the correct setting of the machine, thus avoiding any configuration errors, which could lead to the generation of waste.

The positioning of the part 3, 6, 7 of the machine tool 1 in correspondence with the appropriate PTL, PTB, PTR target configuration can be done manually, or automatically, if the part is mobile via an actuator.

The method according to the invention involves activating an actuator relating to said part 3, 6, 7 of said machine tool 1 in such a way that said part 3, 6, 7 assumes said PTL, PTP, PTR target configuration. This step is identified in figure 3 with the reference L.

Since this is an automatic positioning, in order to guarantee the safety of the operator, the step L can be subordinated to the step M, which requires the operator to press a physical button BO.

Pressing the physical button BO guarantees the operator's full awareness that some parts of the machine tool 1 may move, requiring maximum attention.

In other embodiments the physical button BO can be replaced by a virtual command, a voice command, or other types of commands.

If the operation of making said part 3, 6, 7 of said machine tool 1 assume the PTL, PTP, PTR target configuration is performed correctly, the work system sends positive feedback to the operator.

The feedback can be a flash, or the projection of a symbol, in augmented reality provided, via the display 5, to the operator.

Furthermore, other types of feedback can also be used such as, for example, acoustic, haptic, or vibrational, generated by transducers, or actuators, placed on the cutting machine 1, on the display 5 and/or on other wearable devices, for augmented reality, such as, for example, the instrumented glove 8.

This step is identified, in figure 3, with reference N.

Alternatively, the working plant can send negative feedback to the operator if the operation was not performed correctly.

The processing unit 4 can also have the task of reading further information from the memory unit of said machine tool 1 which represents at least one dangerous condition for the operator. This step is identified, in figure 3, with the reference Q.

For example, from the configuration of the machine tool it is possible to identify potential dangerous conditions such as: main blade 3 or rotating **engraver**; main blade 3 or rotating engraver and operator approaching them; suction device 9 not positioned at the correct height (considering the thickness of the panel to be machined); suction device 9 not in operation during the rotation of the main blade 3 or totally excluded; incorrect positioning of guide 7; non-use of the pusher during the cutting step (considering the position of the guide 7 that provides information on the size of the portion of the piece P to be cut).

The reference R identifies the step of verifying the existence of the above dangerous conditions, in particular via the display 5 for augmented reality.

If these conditions are verified, similarly to step N, the work system provides the operator with feedback.

This step is identified, in figure 3, by the reference S.

In other embodiments, the processing unit 4 can provide, also on the basis of historical data, visible information, in augmented reality, via the display 5, which guides the operator in the best use of the machine tool 1, for example, giving indications of which portion of the tool to use when working with a planer or spindle moulder, in order to guarantee uniform wear of the tool itself.

Furthermore, in other embodiments, the processing unit 4 can provide, also on the basis of historical data, visible information, in augmented reality, via the display 5, which guides the operator in choosing the machine tool 1 to use (having a plurality of machine tools to be able to choose) depending on the type of machining or machining program or order to be carried out, the latter information being available to the processing unit 4 via management software for planning the machining or machining programs or orders to be carried out.

Furthermore, in other embodiments, the processing unit 4 can provide visible information, in augmented reality, via the display 5, relating to the assembly and installation step of the machine, for example suggesting to the operator the sequence of components to be assemble, their correct positioning and the correct method of their installation.

### Advantages

It is an advantage of the present invention to create a method for displaying information that allows the operator to manage the displayed information relating to the configuration of the machine tool, both in terms of type of information and in terms of arrangement of the information.

Another advantage of the present invention is that of creating a method for displaying information that allows the operator to provide commands or inputs to the machine tool in an extremely flexible way, both in terms of the type of commands or inputs and in terms of the position of the controls or input.

A further advantage of the present invention is that of creating a method for displaying information, which allows the operator to be guided in the configuration of the machine tool in a simple and ergonomic way, therefore not requiring high specialization on the part of the operator himself.

Furthermore, an advantage of the present invention is that of creating a working plant that is safer for the operator, to safeguard his health.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Method for displaying information relating to the configuration of a machine tool (1), comprising the steps of:
A. reading from a memory unit of said machine tool (1) said information;
B. sending said information to a display (5) for augmented reality; and
C. overlapping on a real image of the environment surrounding said machine tool (1) and/or said machine tool (1), said information, through said display (5) for augmented reality.

2. Method for displaying information according to the preceding claim, **characterized in that** at least one portion of said information is visible, in augmented reality, in a grouped way within at least one displaying space (10'; 10").

3. Method for displaying information according to any one of the preceding claims, **characterized in that** at least one information (*α*; Y'; Z'; Z") of said information is visible, in augmented reality, in correspondence of a part (3, 6, 7, 9) of said machine tool (1), said at least one information (*α*; Y'; Z'; Z") representing a configuration parameter relating to said part (3, 6, 7, 9) of said machine tool (1).

4. Method for displaying information according to any one of the preceding claims, **characterized**
**in that** it comprises the step of:
D. superimposing on a real image of the environment surrounding said machine tool (1) and/or of said machine tool (1) at least one virtual image (PTL; PTB; PTR) of a part (3, 6, 7) of said machine tool (1), through said display (5) for augmented reality; and
**in that** at least one piece of information (*α*; Y'; Z'; Z") of said information is visible, in augmented reality, in correspondence with said at least one virtual image (PTL; PTB; PTR), said at least one information (*α*; Y'; Z'; Z") representing a configuration parameter relating to said part (3, 6, 7) of said machine tool (1).

5. Method for displaying information according to any one of the preceding claims, **characterized in that** it comprises the steps of:
E. overlapping on a real image of the environment surrounding said machine tool (1) and/or said machine tool (1), at least one virtual command (CS; CB; CBP; CBM; MT; TX), or at least one virtual image (PTL; PTB; PTR) of a part (3, 6, 7) of said machine tool (1), visible in augmented reality, through said display (5) for augmented reality;
F. receiving an input relating to the interaction between an operator, and said at least one virtual command (CS; CB; CBP; CBM; MT; TX) or at least a virtual image (PTL; PTB; PTR) of a part (3, 6, 7) of said machine tool (1), said interaction being detected through a device (5; 8) for augmented reality; and
G. modifying, within said memory unit, at least one information (*α*; Y'; Z'; Z") of said information, as a function of said input.

6. Method for displaying information according to the preceding claim, **characterized in that** said device for augmented reality is a display (5) for augmented reality and/or an instrumented glove (8) and/or a joystick for augmented reality.

7. Method for displaying information according to any one of claims 5 or 6, **characterized in that** said at least one virtual command (CS; CB; CBP; CBM; MT; TX) interacts with said operator in the manner of a button (CB; CBP; CBM), or a cursor (CS), or a free text field (TX), or a drop-down menu (MT).

8. Method for displaying information according to any one of claims 5-7, **characterized in that** said at least one virtual command (CBP; CBM) is visible, in augmented reality, in correspondence with a part (3, 6, 7, 9) of said machine tool (1).

9. Method for displaying information according to any one of claims 5-7, **characterized in that** said at least one virtual command (CBP; CBM) is visible, in augmented reality, in correspondence with at least one virtual image (PTL; PTB; PTR) of said part (3, 6, 7) of said machine tool (1) visible, in augmented reality, through said display (5) for augmented reality.

10. Method for displaying information according to any one of claims 5-7, when dependent on claim 2, **characterized in that** said at least one virtual command (CS; CB; MT; TX) is visible, in augmented reality, within said at least one displaying space (10'; 10").

11. Method for displaying information according to any one of the preceding claims, **characterized in that** said at least one information (*α*; Y'; Z'; Z") of said information represents a configuration parameter relating to a part (3; 6; 7) of said machine tool (1), and in the it comprises the step of:
H. processing a target configuration (PTL; PTB; PTR) of said part (3; 6; 7) of said machine tool (1) as a function of said at least one information (*α*; Y'; Z'; Z").

12. Method for displaying information according to the preceding claim, **characterized in that** it comprises the step of:
I. overlapping information relating to said target configuration (PTL; PTB; PTR) on said real image of said machine tool (1).

13. Method for displaying information according to any one of claims 11 or 12, **characterized in that** it comprises the step of:
L. operating an actuator relating to said part (3; 6; 7) of said machine tool (1), in such a way that said part (3; 6; 7) assumes said target configuration (PTL; PTP; PTR).

14. Method for displaying information according to the preceding claim, **characterized in that** it comprises the step of:
M. performing step L only after receiving a physical input through a physical input device (BO), for example, a wired button (BO).

15. Method for displaying information according to any one of claims 11 or 14, **characterized in that** it comprises the step of:
N. providing feedback to an operator when said part (3; 6; 7) of said machine tool (1) has assumed said target configuration (PTL; PTP; PTR), said feedback being, for example, of the optical, acoustic, haptic, vibrational type.

16. Method for displaying information according to any one of the preceding claims, **characterized in that** it comprises the steps of:
O. detecting, through a device (5; 8) for augmented reality, the interaction between an operator and said information, visible in augmented reality, or said at least one virtual command (CS; CB; CBP; CBM; MT; TX), visible in augmented reality; and
P. positioning in the environment surrounding said machine tool (1), said information, or said at least one virtual command (CS; CB; CBP; CBM; MT; TX), as a function of said interaction.

17. Method for displaying information according to any one of the preceding claims, **characterized in that** it comprises the steps of:
Q. reading from said memory unit of said machine tool (1), further information which represents at least one dangerous condition for the operator;
R. checking if said dangerous conditions are in place, in particular through said display (5) for augmented reality; and
S. if the dangerous conditions are verified, providing feedback to the operator through a device (5; 8) for augmented reality.

18. Working plant for working a piece (P) made of wood or similar materials, comprising:
- a machine tool (1);
- a control unit (4); and
- an augmented reality display,
wherein said machine tool (1) comprises:
- a cutting tool (3) for machining said piece (P);
- a support plane (2) for supporting said piece (P);
- abutment means (6, 7) for referencing said piece (P) with respect to said machine tool (1); and
- storage means for storing information relating to the machining configuration of said machine tool (1);
said control unit (4) being in communication with said machine tool (1) and said display (5) for augmented reality, so as to be able to exchange information from, and to, said machine tool (1), and from, and to said display (5) for augmented reality, said display (5) being configured to overlap information received from said control unit (4) on a real image, said working plant being **characterized in that** said control unit (4) is programmed to read information from said memory unit of said machine tool (1), and exchange information with said augmented reality display (5) and said machine tool (1), to perform the method according to any of claims 1-17.
